Europäisches Patentamt

European Patent Office

Office européen des brevets

(19)

(11) Veröffentlichungsnummer: **0 467 008 B1**

(12) **EUROPÄISCHE PATENTSCHRIFT**

(45) Veröffentlichungstag der Patentschrift: **20.09.95**

(51) Int. Cl.6: **C08B 1/00**, D01F 2/02, C08L 1/02

(21) Anmeldenummer: **90890338.8**

(22) Anmeldetag: **18.12.90**

(54) **Lösung von Cellulose in Wasser und N-Methyl-morpholin-N-oxid.**

(30) Priorität: **16.07.90 AT 1509/90**

(43) Veröffentlichungstag der Anmeldung:
**22.01.92 Patentblatt 92/04**

(45) Bekanntmachung des Hinweises auf die Patenterteilung:
**20.09.95 Patentblatt 95/38**

(84) Benannte Vertragsstaaten:
**AT BE CH DE DK ES FR GB GR IT LI LU NL SE**

(56) Entgegenhaltungen:
**WO-A-83/04415**
**FR-A- 1 556 993**

(73) Patentinhaber: **LENZING AKTIENGESELL-
SCHAFT
Werkstrasse 1
A-4860 Lenzing (AT)**

(72) Erfinder: **Eichinger, Dieter, Dr.
Oberstadtgries 5
A-4840 Vöcklabruck (AT)**
Erfinder: **Männer, Johann
Attersee 145
A-4852 Weyregg (AT)**
Erfinder: **Astegger, Stefan, Dr.**
**Feldgasse 14
A-4840 Vöcklabruck (AT)**
Erfinder: **Weinzierl, Karin, Dr.
Ausserungnach 2
A-4850 Timelkam (AT)**
Erfinder: **Hinterholzer, Peter, Dipl.-Ing.
Stelzhamerstrasse 34
A-4850 Timelkam (AT)**
Erfinder: **Zikeli, Stefan, Ing.
Schacha 14
A-4844 Regau (AT)**
Erfinder: **Firgo, Heinrich, Dr.
Oberstadtgries 7
A-4840 Vöcklabruck (AT)**
Erfinder: **Wolschner, Bernd, Dr.
Hatschekstrasse 8
A-4840 Vöcklabruck (AT)**

(74) Vertreter: **Müllner, Erwin, Dr. et al
Patentanwälte,
Dr. Erwin Müllner,
Dipl.-Ing. Werner Katschinka,
Dr. Martin Müllner,
Postfach 159,
Weihburggasse
9
A-1010 Wien (AT)**

**Beschreibung**

Die vorliegende Erfindung betrifft eine Lösung von Cellulose in Wasser und N-Methyl-morpholin-N-oxid.

Es ist z.B. aus der US-PS 4 196 282 bekannt, eine Lösung von Cellulose in N-Methylmorpholin-N-oxid (im folgenden mit NMMO abgekürzt) und Wasser herzustellen. Celluloselösungen werden z.B. zur Herstellung von Cellulosefasern oder anderen Formkörpern auf Cellulosebasis benötigt. Zu diesem Zweck wird die Lösung durch Spinndüsen in ein Fällbad extrudiert. Die Verwendung eines Gemisches von NMMO und Wasser als Lösungsmittel hat verschiedene Vorteile; vor allem ist hervorzuheben, daß ein (nahezu) geschlossener Lösungsmittelkreislauf möglich ist, sodaß die Umweltbelastung sehr gering gehalten werden kann.

Bei derartigen Lösungen treten jedoch folgende Probleme auf:

Beim Lösen bzw. Erwarmen des Systems bilden sich Amine (N-Methylmorpholin und Morpholin). Dies sollte insofern vermieden werden, als dadurch der Prozeß unwirtschaftlich wird, da NMMO sehr teuer ist. Um diesen Abbau in erträglichen Grenzen zu halten, werden Stabilisatoren eingesetzt.

Als sehr unangenehm erweisen sich jedoch die in der Wärme entstehenden, färbigen Pigmente, die einerseits Probleme beim Bleichen der cellulosischen Produkte verursachen und zum anderen ein relativ umfangreiches Reinigen des NMMO vor dessen Wiederverwendung erfordern.

Es wurde nun überraschend gefunden, daß obige Nachteile vermieden werden, wenn die Lösung 0,01 bis 1%, vorzugsweise 0,1%, $H_2O_2$ und 0,01 bis 2%, vorzugsweise 0,1% Oxalsäure bzw. deren Salze, enthält.

Als Erklärung für die Stabilisierung von NMMO kann angenommen werden, daß das sich beim Abbau ergebende N-Methylmorpholin durch das $H_2O_2$ wieder zu NMMO oxidiert wird, sodaß insgesamt (fast) kein Abbau stattfindet.

Daß die Cellulose weniger verfärbt wird, liegt vermutlich an der an sich bekannten Bleichwirkung von $H_2O_2$. $H_2O_2$ wird deshalb bereits in der Zellstofftechnoiogie bzw. in der Baumwollbleiche als Bleichmittel eingesetzt, wobei die Bleichwirkung sehr stark pH-abhängig ist. Cellulosische NMMO/Wasser-Lösungen haben bei 90°C einen pH-Wert von 12-13.

Bei radikaiischen Reaktionen sind möglichst niedrige Temperaturen und keine Übergangsmetallionen erwünscht; letzteres kann durch die Verwendung von Bleichestabilisatoren erreicht werden.

Somit ist die Stabilisierung von Cellulose und NMMO durch $H_2O_2$ und Bleichestabilisatoren möglich. Die Stabilisierung der Cellulose ist insofern wichtig, als ein Abbau der Cellulose die Produkteigenschaften des cellulosischen Formkörpers erheblich schmälert.

Es ergibt sich somit bei der Erfindung der Vorteil, daß der Abbau von NMMO zu N-Methylmorpholin bei der Herstellung der Lösung und bei deren Erwärmung verringert wird; dadurch verringert sich auch der Aufwand für die Rückgewinnung entsprechend, und die Wirtschaftlichkeit des gesamten Verfahrens steigt. Ein weiterer Vorteil ist die äußerst geringe Verfärbung der Lösung, wodurch das Bleichen der cellulosischen Produkte z.T. nicht mehr notwendig ist, d.h. die Anwendung der wegen der Bildung von chlorierten Kohlenwasserstoffe (z.T. auch Dioxine) umstrittenen (aber billigen) Chlorbleiche kann möglicherweise entfallen, bzw. allgemein können die Bleichkosten z.B. für eine $H_2O_2$-Bleiche reduziert werden bzw. entfallen.

Beispiele 1 und 2

Vergleich einer Lösung mit $H_2O_2$ mit einer ohne $H_2O_2$.

In einem 5 l-Rührbehälter wird aus einer Suspension, die aus 2888 g 80%-iger wässeriger NMMO-Lösung, 300 g Cellulose (Buckeye-V5-Zellstoff 90% Trockengehalt), $H_2O_2$ und Stabilisator besteht (vgl. Tabelle 1), Wasser im Vakuum abdestilliert.

Nach ca. 30 min wurden dabei 3000 g Lösung mit folgender Zusammensetzung erhalten:

9 % Cellulose (Buckeye V5)

14 % Wasser

77 % NMMO

Diese lösung wurde durch eine Düse gepreßt, im Luftspalt verzogen und in einem Fällbad koaguliert, wobei Fasern erhalten wurden. Im Beispiel 1 (Vergleichsversuch) wurde nur Oxalsäure als Stabilisator verwendet, im Beispiel 2 Oxalsäure und $H_2O_2$. Die Mengen des Stabilisators und die Daten der erhaltenen Fasern sind in Tabelle 1 zusammengefaßt.

Tabelle 1

| Beispiel | $H_2O_2$ | Oxalsäure | Weißgrad der gewaschenen Faser | DP der Faser | Amin in den Brüden |
|---|---|---|---|---|---|
| 1 | - | 0,5 % | 64,5 | 610 | 0,12% |
| 2 | 0,1 % | 0,1 % | 68,3 | 560 | *) |

*) Die Konzentration ist so niedrig, daß sie potentiometrisch nicht mehr bestimmbar ist.

Es ist möglich, den TAPPI-Weißgrad bei gleichzeitigem Halten des Cellulose-DP auf Kosten der Stabilisierung des NMMO zu erhöhen.

Beispiele 3 bis 12 (Vergleichsversuche)

Vergleich verschiedener Stabilisatoren.

Es wird wie bei Beispielen 1 und 2 vorgegangen. Der jeweils verwendete Stabilisator, die Menge des jeweils eingesetzten $H_2O_2$ und der DP-Wert der jeweils hergestellten Cellulose ist aus Tabelle 2 ersichtlich.

Tabelle 2

| Beispiel | $H_2O_2$ | Stabilisator | DP der koagulierten Cellulose |
|---|---|---|---|
| 3 | 0,03 % | 0,1 % Polyacrylsäure | 460 |
| 4 | 0,06 % | 0,1 % Polyhydroxyacrylsäure | 490 |
| 5 | 0,4 % | 0,5 % Polyhydroxyacrylsäure | 520 |
| 6 | 0,2 % | 2 % Phosphorsäure | 390 |
| 7 | 0,5 % | 0,5 % Phthalsäure | 330 |
| 8 | 0,5 % | 0,5 % Benzoesäure | 250 |
| 9 | 0,5 % | 0,5 % Essigsäure | 200 |
| 10 | 0,1 % | 0,1 % EDTA | 520 |
| 11 | 0,1 % | 0,1 % Wasserglas | 330 |
| 12 | 0,03 % | 0,1 % Phosphonsäure | 490 |

Bleichstabilisatoren und Eisenkomplexbildner sind auch bei diesem System wirksam.

Beispiele 13 und 14

Vergleich einer Lösung, die Rutin enthält,mit einer, die $H_2O_2$ und Oxalsäure enthält.
Als Spinnmasse wurden etwa 18 kg folgenden Gemisches eingesetzt:
10,0 % Cellulose (Buckeye V5)
78,0 % NMMO (gebraucht, Kohle-gereinigt)
12,0 % $H_2O$
Es wurde bei Beispiel 13 0,02% Rutin als Stabilisator zugesetzt, bei Beispiel 14 0,1 % $H_2O_2$ und 0,5 % Oxalsäure.
Die Versuche wurden mit einem 40 l-Reaktor durchgeführt. Um einen repräsentativen Datendurchschnitt zu erhalten, wurden in mehreren Spinnversuchen jeweils 3 Zyklen durchgeführt, d.h. das beim Spinnen gewonnene Spinnbad (=1.Zyklus) wird eingedampft und das auf diese Weise rückgewonnene NMMO wieder zur Lösungsherstellung und zum Verspinnen (=2.Zyklus) verwendet. Dieselbe Vorgangsweise wurde wiederholt (=3.Zyklus). Dabei wurden folgende Daten erfaßt:
- Zunahme der Verunreinigungen
- Korrosionsverhalten
- Verhalten von Oxalsäure/$H_2O_2$ im NMMO-Kreislauf
- Faserrohweiße
- Faserdaten allgemein
- Zersetzungstemperatur der Spinnamsse
Die gesammelten Spinnbäder je Zyklus wurden am Dünnschichtverdampfer aufkonzentriert und für den jeweils folgenden Zyklus verwendet.

Aus Tabelle 3 ist zu ersehen, wie der Extinktionsfaktor des NMMO während der einzelnen Zyklen steigt bzw. wie er nach einer Kohlereinigung wieder sinkt. Außerdem sind die Verunreinigung durch Fe und die $H_2O_2$- sowie die Oxalsäure-Konzentration angeführt.

Tabelle 3

| STABILISATOR | NMMO AUSGANG | R U T I N *) | | NMMO AUSGANG | O X A L S Ä U R E / $H_2O_2$ | | | |
|---|---|---|---|---|---|---|---|---|
| ZYKLUS | | 1. | 2. | | 1. | 2. | 3. | 3. Kohle-ger. |
| Extinktionsfaktor | 0,027 | 1,242 | 1,650 | 0,027 | 0,243 | 0,280 | 0,390 | 0,007 |
| Verfärbung gegenüber NMMO-Ausgang | | 46-fach | 61-fach | | 9-fach | 10-fach | 14-fach | |
| % $H_2O_2$ | | | | 0,076 | 0 | 0 | 0 | 0 |
| % Oxalsäure | | | | 0,38 | 0,33 | 0,38 | 0,33 | 0,33 |

*) Spinnbad aus dem 3. Rutin-Zyklus wurde nicht erfaßt

Die in Tabelle 3 angeführten Ergebnisse lassen sich wie folgt Zusammenfassen:

- Zunahme von Verunreinigungen: sie ist bei Verwendung von Rutin 5 bis 6 mal höher als bei Verwendung von $H_2O_2$/Oxalsäure.
- Verhalten von Oxalsäure/$H_2O_2$ im NMMO-Kreislauf: Rutin wird, wie auch aus früheren Versuchen hervorgeht, zum Teil zersetzt und bei einer Spinnbadreinigung mit Kohle zur Gänze aus dem NMMO eliminiert.

Bei Oxalsäure/$H_2O_2$ wird das eingesetzte $H_2O_2$ vollkommen zersetzt. Oxalsäure wird im NMMO-Kreislauf jedoch nur unwesentlich verbraucht.

Bei einer Spinnbadreinigung mit Aktivkohle wird Oxalsäure nicht zurückgehalten und kann somit wieder als Stabilisator eingesetzt werden.

Für die TAPPI-Faser-Rohweiße ergab sich bei Rutin in den einzelnen Zyklen 62; 59; und 59; bei Oxalsäure/$H_2O_2$ ergab sich 70; 70; 71.

Die Faser-Rohweiße liegt also mit Rutin bei Tappi ~62 um ca. 8 Punkte niedriger als mit Oxalsäure/$H_2O_2$, wo ein Tappi von ~70 erreicht wurde; wobei mit den Zyklen die Rohweiße mit Rutin um ca. 2 Punkte abnimmt, mit Oxalsäure/$H_2O_2$ um ca. 2 Punkte zunimmt.

Die Faserdaten /DP; FFk; FDk; SF; SDk) lagen bei den beiden Versuchen auf etwa dem gleichen Niveau.

Beispiele 15 bis 20:

In einem IKA-DUPLEX-Kneter werden 20 g Zellstoff (Trockengehalt = 90%) in 182 g NMMO.$H_2O$, 3 g Oxalsäuresalz (vgl. Tabelle 4) und 0,6 g $H_2O_2$ (30 % ig) bei 90 °C in 1 Stunde gelöst.

Anschließend wurde mittels eines HAAKE RV20-Rotationsviskosemeters im Oszillationsmodus die Komplexe Viskosität bei einer Winkelgeschwindigkeit von 4,3 [1/s] und 185 [1/s] gemessen.

Tabelle 4

| Beispiel Nr. | Stabilisator | Komplexe Viskosität bei 4,3 [1/s] | Komplexe Viskosität bei 185 [1/s] |
|---|---|---|---|
| 15 | Ammoniumoxalat | 762 | 37 |
| 16 | Lithiumoxalat | 750 | 33 |
| 17 | Natriumoxalat | 703 | 32 |
| 18 | Magnesiumoxalat | 530 | 27 |
| 19 | Oxalsäure | 768 | 34 |
| 20 | Rutin | 767 | 33 |

Die Lösungen verfärbten sich bei der Herstellung nicht. Aufgrund der gleichen Viskositäten kann geschlossen werden, daß die Stabilisierungswirkung von Oxalaten/$H_2O_2$ (außer Mg-Oxalat) und Oxalsäure/$H_2O_2$ gleich ist.

## Patentansprüche

1. Lösung von Cellulose in Wasser und N-Methyl-morpholin-N-oxid, dadurch gekennzeichnet, daß sie 0,01 bis 1 %, vorzugsweise 0,1 % $H_2O_2$ , und 0,01 bis 2 %, vorzugsweise 0,1 %, Oxalsäure bzw. deren Salze, enthält.

## Claims

1. A solution of cellulose in water and n-methyl-morpholine-n-oxide, characterised in that it contains 0.01 to 1%, preferably 0.1% $H_2O_2$, and 0,01% to 2%, preferably 0.1% oxalic acid or salts thereof.

## Revendications

1. Solution de cellulose dans eau et N-méthyl-morpholine-N-oxyde, caractérisée en ce qu'elle comprend de 0,01 à 1% de préférence, 0,1% de $H_2O_2$ et de 0,01 à 2%, de préférence 0,1%, d'acide oxalique ou de ses sels.